# EUROPEAN PATENT APPLICATION

(11) **EP 1 783 585 A1**
(43) Date of publication of application: **09.05.2007**
(21) Application number: 04772355.6
(22) Date of filing: 27.08.2004
(51) Int. Cl.: G06F 3/00

(54) **OPERATION SCREEN CREATING METHOD, DISPLAY CONTROLLER, OPERATION SCREEN CREATING PROGRAM AND COMPUTER-READABLE RECORDING MEDIUM ON WHICH PROGRAM IS RECORDED**

(71) Applicant: Fujitsu Ltd., Kawasaki-shi, Kanagawa 211-8588 (JP)
(72) Inventor: TSUTSUMI, Shinji, c/o Fujitsu Limited, Kawasaki-shi, Kanagawa 2118588 (JP); NAKAMURA, Yousuke, c/o Fujitsu Limited, Kawasaki-shi, Kanagawa 2118588 (JP); KATSUMATA, Hajime, c/o Fujitsu Limited, Kawasaki-shi, Kanagawa 2118588 (JP)
(74) Representative: Stebbing, Timothy Charles
(86) International application number: PCT/JP2004/012399
(87) International publication number: WO 2006/022021

(57) **Abstract**

Provided are a selection item arrangement unit (11) for arranging selection items in an operation screen and a back area setting unit (12) for setting an area having a position and size corresponding to an area of all the selection items, which can be arranged as selection items, as a back area for making a return to a higher hierarchy relative to the current hierarchy when a selection is made by the pointer (70). This enables the reduction of a quantity of movement of the pointer (70) when a back operation is conducted throughout a plurality of operation screens by manipulating the pointer (70), thereby enhancing the operability.

## Description

### TECHNICAL FIELD

The present invention relates to the generation of an operation screen put on a display device and having selection items which can be selected by a pointer manipulated through a pointing device.

### BACKGROUND ART

For example, of applications to be executed in an information processing apparatus such as PC (Personal Computer), some have a plurality of operation screens associated hierarchically. In such applications, when a user carries out selection processing and selects/presses a forward key on an operation screen in a specified hierarchy, an operation screen in the next hierarchy (lower hierarchy) appears on this display, or, for example, when the user selects/presses a back key or the like on the operation screen, the operation screen in the original hierarchy (higher hierarchy) appears on the display (see the following Patent Document 1).

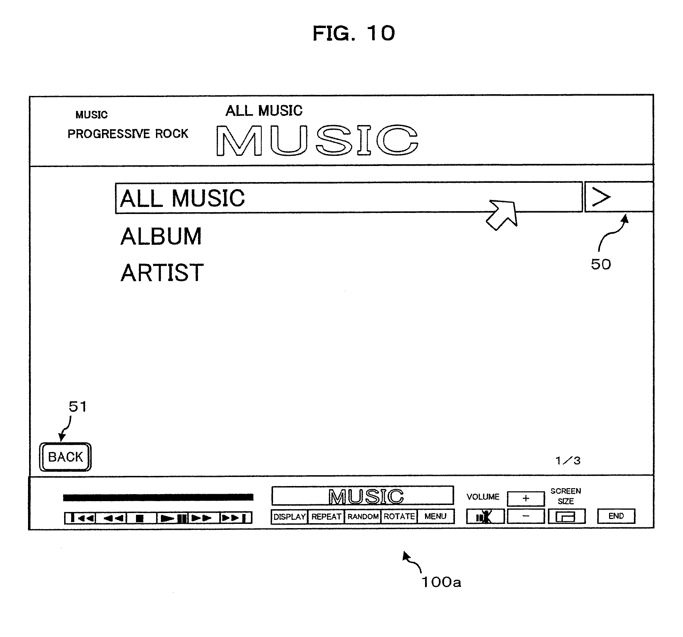

FIGs. 10 to 12 are illustrations of examples of operation screens generated according to a conventional operation screen generating method. These operation screens shown in FIGs. 10 to 12 are examples of operation screens of a music reproduction application to be executed by a PC or the like and, for example, they are put on a display of a PC. Moreover, the PC carries out various types of processing (for example, music reproduction) when an operator conducts a selection/input operation in these operation screens through the use of a pointing device, such as a mouse, or keyboard.

An operation screen 100a shown in FIG. 10 is made such that selection items (choices) which can be selected by an operator are displayed as a list at an approximately central position of the screen in its right and left directions and, in the example shown in FIG. 10, "all music", "album" and "artist" are displayed as the selection items.

In addition, in the operation screen 100a, of these plurality of selection items, the item selected by once making the clicking in a state where a pointer is overlapped therewith by, for example, a pointing device is displayed in a state surrounded by a rectangular frame, thereby making clear the selected state (which will sometimes be referred to as an active state). In the example shown in FIG. 10, the selection item "all music" is in the active state. A description will be given hereinbelow of a case of using a mouse as a pointing device which moves a pointer.

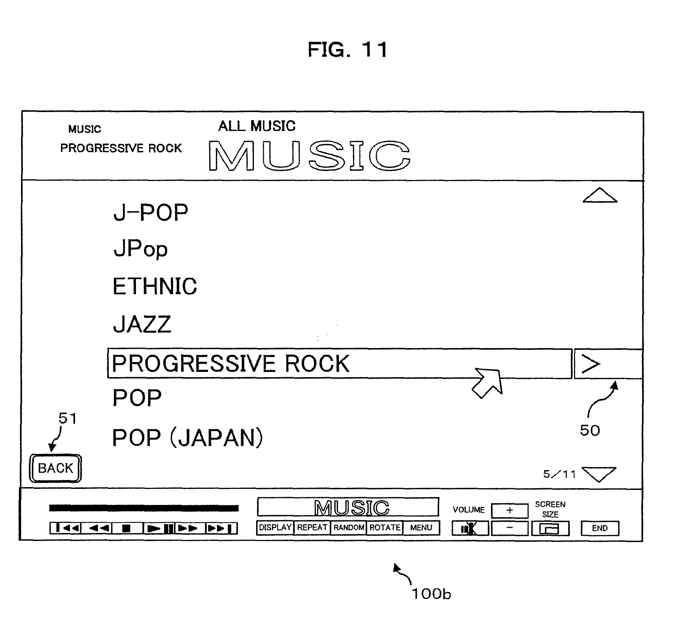

Still additionally, in the operation screen 100a, a decision key 50 for deciding the selection processing is displayed at a position on the right side of the selection item which is in the active state. This decision key 50 has a button-like configuration formed at a height approximately equal to that of the selection item and, when a click is made through the mouse in a state where the pointer is moved to be overlapped with the decision key 50, this selection item is decided so as to carry out the processing previously set with respect to this selection item. Incidentally, in the operation screen 100a shown in FIG. 10, an operation screen 100b shown in FIG. 11 is put on the display by selecting/deciding, for example, the selection item "all music".

Moreover, the operation screen 100a has a back key 51 to a right lower position thereof. This back key 51 is for the return to an operation screen (not shown) in a higher hierarchy on the operation screen 100a appearing at present and, when the pointer is moved to be on this back key 51 and the click is conducted through the mouse, the movement to an operation screen in a higher hierarchy is achievable.

In the following description, displaying a specified operation screen on the display will sometimes be referred to as the return to that operation screen.

Still moreover, on a lower side of the operation screen 100a, keys are disposed in order to realize various types of functions related to the music reproduction, such as reproduction, stop, fast-forward, rewind and volume control, and the operator sets the pointer to these keys and clicks them, thereby carrying out the processing corresponding to each of the keys.

The operation screen 100b shown in FIG. 11 is for indicating music data under management of a music reproduction application as a list for each genre. This operation screen 100b is arranged as well as the above-mentioned operation screen 100a so that selection items selectable by the operator are displayed as list at an approximately central position thereof in its right and left directions. In the example shown in FIG. 11, as the selection items (choices), there are displayed "J-POP", "JPop", "Ethnic", "Jazz", "Progressive Rock", "Pop" and "Pop (Japan)".

Also in this operation screen 100b, at a position on the right side of the selection item which is in the active state, there is displayed a decision key 50 formed at a height approximately equal to that of this selection item. Moreover, a back key 51 is disposed at a left lower position in this operation screen 100b.

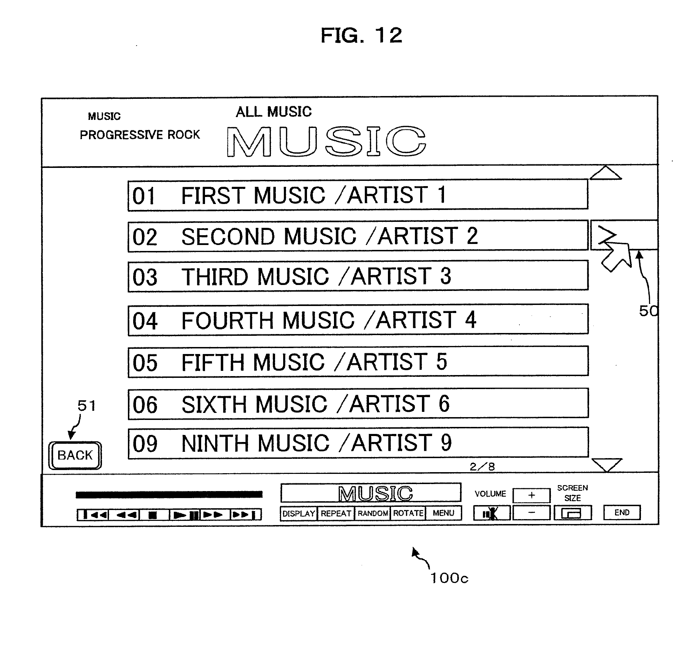

An operation screen 100c shown in FIG. 12 is for indicating, of all the music data managed by this music reproduction application, music falling under the genre selected in the operation screen 100b in the form of a list. This operation screen 100c is arranged as well as the above-mentioned operation screen 100a so that selection items selectable by the operator are displayed as a list at an approximately central position thereof in its right and left directions, and in the example shown in FIG. 12, music title and artist names thereof are displayed as a list.

In addition, also in this operation screen 100c, at a position on the right side of the selection item which is in the active state, there is displayed a decision key 50 formed at a height approximately equal to that of this selection item. Still additionally, a back key 51 is disposed at a left lower position in this operation screen 100c.

Furthermore, the operation screens 100a, 100b and 100c shown in FIGs. 10 to 12 are associated hierarchically with each other and, for example, when the selection item "all music" is selected/decided in the operation screen 100a shown in FIG. 10, the operation screen 100b shown in FIG. 11 appears and, when the selection item "progressive rock" is selected/decided in this operation screen 100b, the operation screen 100c shown in FIG. 12 appears. Moreover, the reproduction of this music starts when the music desired to reproduce is selected/decided from the list in this operation screen 100c. That is, the operation screen 100b is lower in hierarchy than the operation screen 100a while the operation screen 100c is lower in hierarchy than the operation screen 100b.

Still furthermore, when the operator manipulates the mouse to put the pointer on the back key 51 and then conduct the selection/input operation (click), the operation screen 100b appears on the display and, when the operator manipulates the mouse to put the pointer on the back key 51 and then conduct the selection/input operation (click), the operation screen 100a appears on the display.

There is a problem which arises with such a conventional operation screen display control method, however, in that, since the return to the operation screen in the higher hierarchy takes place in a case in which the operator conducts the operation through the use of the pointing device, there is a need to put the pointer on the back key 51, which causes complicatedness because of the movement of the pointer to the back key 51 and the positioning of the pointer to the back key 51, thereby resulting in poor operability.

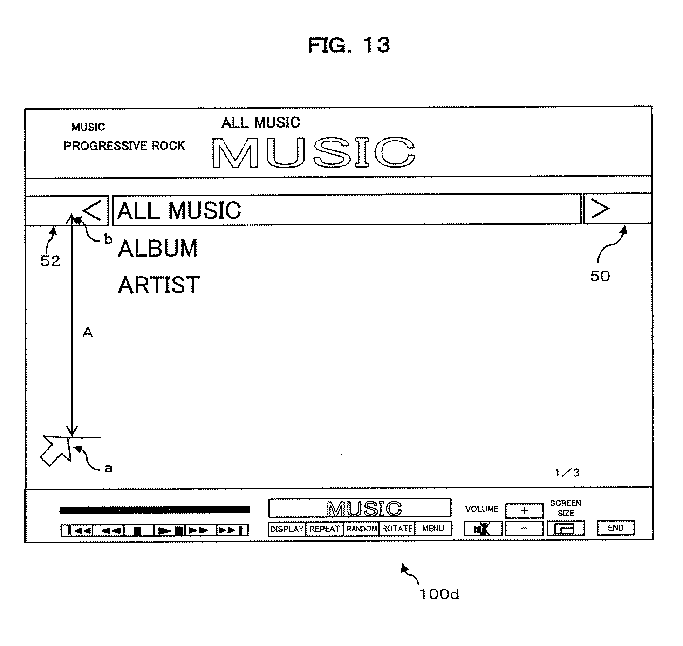

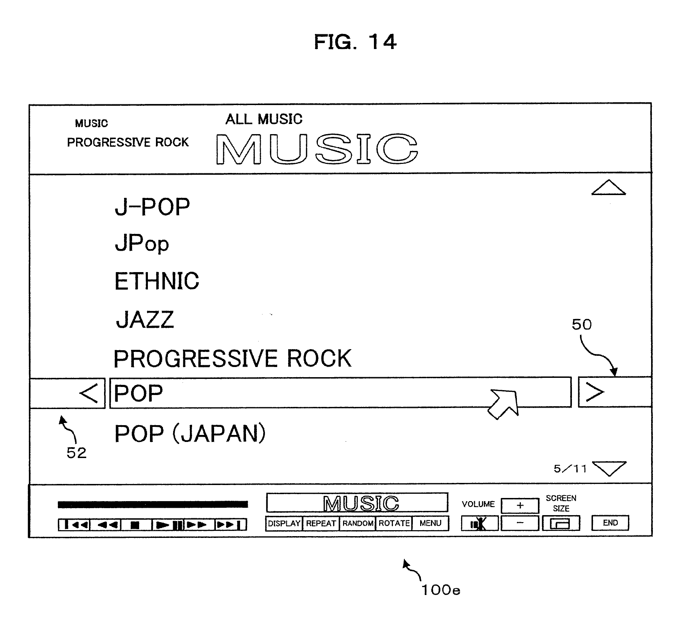

FIGs. 13 and 14 are illustrations of examples of different operation screens generated according to the conventional operation screen generating method. In operation screens 100d and 100e shown in FIGs. 13 and 14, instead of the back key 51 in the operation screens 100a to 100c, a back key 52 formed at a height approximately equal to that of a selection item which is in the active state is displayed at a position on a left side of the selection item.

In addition, in these operation screens 100d and 100e, the return to an operation screen in a higher hierarchy can be made when an operator manipulates a mouse to put a pointer on this back key 52 and then make the clicking, which shortens the moving distance of the pointer to enhance the operability in conducting an operation for the movement to an operation screen in a higher hierarchy.

These operation screens 100d and 100e are associated hierarchically so that, for example, the operation screen 100e appears by selecting/deciding the selection item "all music" in the operation screen 100d.

In this operation screen 100e, for example, in a case in which the operator wants to perform the movement to the operation screen 100d in the higher hierarchy in a state where the pointer lies on the selection item "Pop", the operator manipulates the mouse to put the pointer on the back key 52 appearing at the position on the left side of the selection item "Pop" and then click it, thereby displaying the operation screen 100d on the display.

However, in general, when the return from the operation screen 100e to the operation screen 100d takes place by conducting the selection processing using the mouse and the pointer in this way, in the operation screen 100d to be displayed after the return, the pointer appears at the position of the clicking of the back key 52 (i.e., the position of the clicked back key 52) and, in the operation screen 100d immediately after the return, the selection item selected lastly (in the example shown in FIG. 13, the selection item "all music") becomes in the active state.

Accordingly, for the further return from this selection item 100d to an operation screen in a higher hierarchy, in the operation screen 100d, there is a need for the operator to manipulate the mouse in vertical direction thereof for moving the pointer from the position of the clicking of the back key 52 in the operation screen 100e (see the position a in FIG. 13) up to the position of the selection item (in the example shown in FIG. 13, "all music") lastly selected in the operation screen 100d (see the position b in FIG. 13) (see the distance A in FIG. 13). This is troublesome.

In particular, in a plurality of operation screens having a deep hierarchy structure, for the return from an operation screen in a deep hierarchy up to an operation screen in a hierarchy higher by several steps than that hierarchy, there is a need to click a back key 52 in each operation screen in each hierarchy, which requires frequent vertical movements of a pointer for the selection of the back key 52 in the respective operation screens. This creates a problem of troublesomeness.

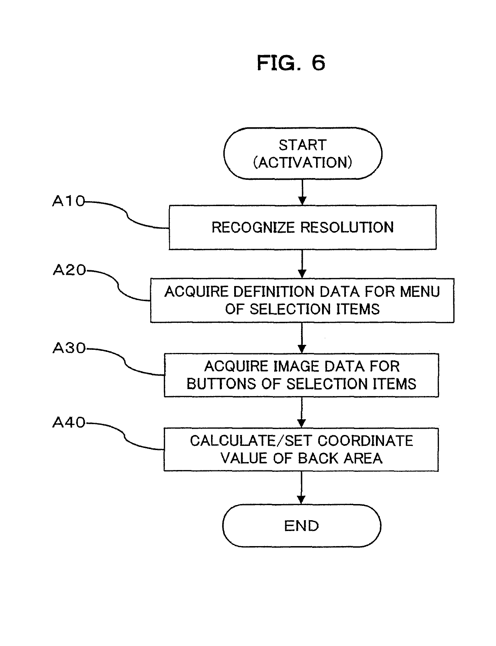

The present invention has been developed in consideration of these problems, and it is an object of the invention to reduce the quantity of movement of a pointer in manipulating the pointer to carry out the back operation throughout a plurality of operation screen.
Patent Document 1 : Japanese Patent Registration No. 3064296 (Page 4, Fig. 6)

### DISCLOSURE OF THE INVENTION

For achieving the above-mentioned purpose, an operation screen generating method according to the present invention, which generates an operation screen having a plurality of selection items formed hierarchically and selectable by a pointer operated by a pointing device, comprises a selection item arrangement step of arranging the selection items on the operation screen and a back area setting step of setting an area having a position and size corresponding to an area of all the selection items, arrangeable as the selection items, as a back area for making a return to a higher hierarchy relative to the current hierarchy when a selection is made by the pointer.

It is also appropriate that, in the back area setting step, the position and size of the back area are set so that an area of the back area along a direction of alignment of all the selection items covers an area of all the selection items in the alignment direction thereof, or that, in the selection item arrangement step, a non-displayed selection item is displayed by a scroll operation.

In addition, it is also appropriate that the operation screen generating method further comprises a display device information acquisition step of acquiring display device information on a display size on a display device and, in the selection item arrangement step, a size and/or arrangement position of each of the plurality of selection items are determined on the basis of the display device information acquired in the display device information acquisition step.

Still additionally, it is also appropriate that the operation screen generating method further comprises a data holding step of holding definition data and image data on the selection item in a state previously associated with the display device information and, in the selection item arrangement step, the definition data and image data agreeing with the display device are acquired from the definition data and image data held in the data holding step on the basis of the display device information acquired in the display device information acquisition step so that the selection item on the operation screen is generated on the basis of the acquired definition data and image data.

Yet additionally, it is also appropriate that the operation screen generating method further comprises a pointer shape changing step of, when the pointer exists on the back area, displaying the pointer having a shape different from a shape of the pointer in an area other than the back area.

Moreover, it is also acceptable that the back area is set in an invisible state.

Furthermore, a display control apparatus according to the present invention, which generates an operation screen having a plurality of selection items formed hierarchically and selectable by a pointer operated by a pointing device, comprises a selection item arrangement unit for arranging the selection items in the operation screen and a back area setting unit for setting an area having a position and size corresponding to an area of all the selection items, arrangeable as the selection items, as a back area for making a return to a higher hierarchy relative to the current hierarchy when a selection is made by the pointer.

It is also appropriate that the back area setting unit sets the position and size of the back area so that an area of the back area along a direction of alignment of all the selection items covers an area of all the selection items in the alignment direction thereof , or that the selection item arrangement unit displays a non-displayed selection item by a scroll operation.

In addition, it is also appropriate that the display control apparatus further comprises a display device information acquisition unit for acquiring display device information on a display size on a display device and the selection item arrangement unit determines a size and/or arrangement position of each of the plurality of selection items on the basis of the display device information acquired by the display device information acquisition unit.

Still additionally, it is also appropriate that the display control apparatus further comprises a data holding unit for holding definition data and image data on the selection items in a state previously associated with the display device information and the selection item arrangement unit acquires the definition data and image data agreeing with the display device from the definition data and image data held in the data holding unit on the basis of the display device information acquired by the display device information acquisition unit so that the selection item on the operation screen is generated on the basis of the acquired definition data and image data.

Yet additionally, it is also appropriate that the display control apparatus further comprises a pointer shape changing unit for, when the pointer exists on the back area, displaying the pointer having a shape different from a shape of the pointer in an area other than the back area.

Moreover, it is also acceptable that the back area is set in an invisible state.

Furthermore, an operation screen generating program according to the present invention makes a computer, which generates an operation screen having a plurality of selection items formed hierarchically and selectable by a pointer operated by a pointing device, carry out a selection item arrangement step of arranging the selection items on the operation screen and a back area setting step of setting an area having a position and size corresponding to an area of all the selection items, arrangeable as the selection items, as a back area for making a return to a higher hierarchy relative to the current hierarchy when a selection is made by the pointer.

It is also appropriate that, in the back area setting step, the operation screen generating program makes the computer set the position and size of the back area so that the back area along a direction of alignment of all the selection items covers an area of all the selection items in the alignment direction thereof, or that, in the selection item arrangement step, the operation screen generating program makes the computer display a non-displayed selection item by a scroll operation.

Moreover, a computer-readable recording medium according to the present invention records the above-mentioned display control program.

The present invention provides an advantage of improving the operability by reducing the quantity of movement of a pointer. In addition, the present invention provides a high convenience in that, when a pointer exists on a back area, the pointer having a shape different from a shape in an area other than the back area is displayed on a display device so that an operator can easily recognize the fact that the pointer lies on the back area.

### BRIEF DESCRIPTION OF THE DRAWINGS

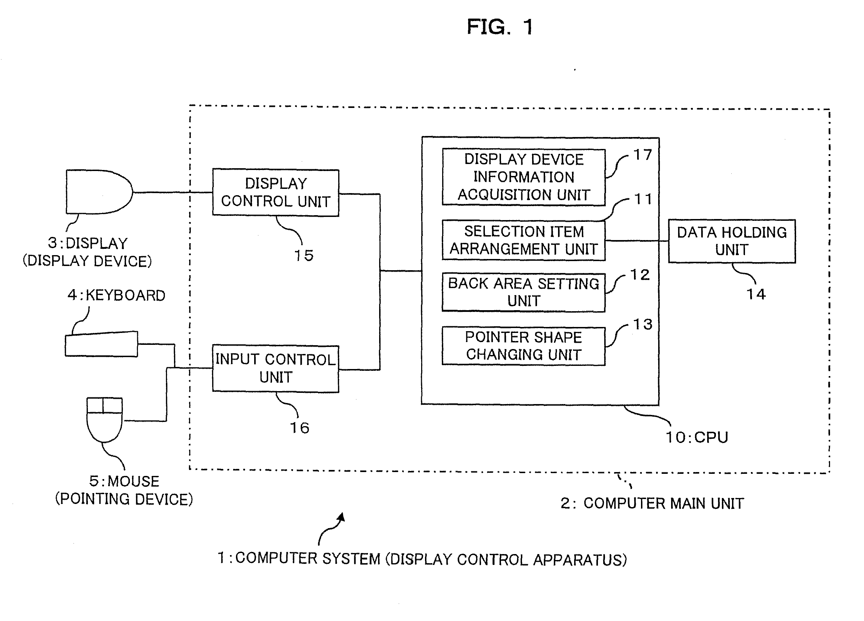

[FIG. 1] is an illustrative view showing a configuration of a computer system (information processing apparatus; display control apparatus) according to an embodiment of the present invention.

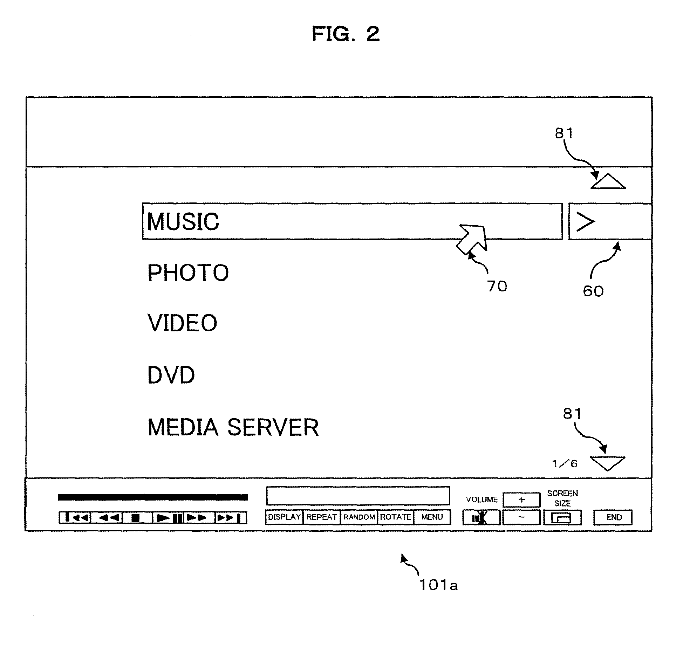

[FIG. 2] is an illustration of an example of an operation screen in a computer system according to an embodiment of the present invention.

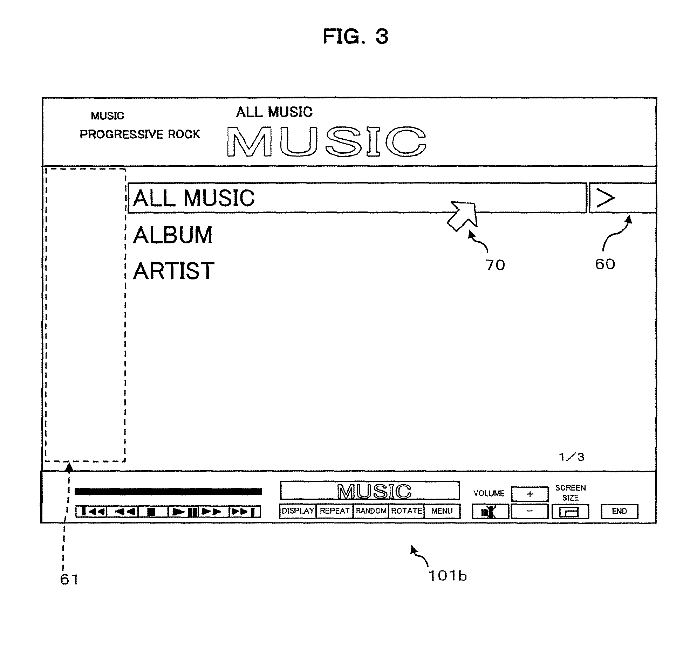

[FIG. 3] is an illustration of an example of an operation screen in a computer system according to an embodiment of the present invention.

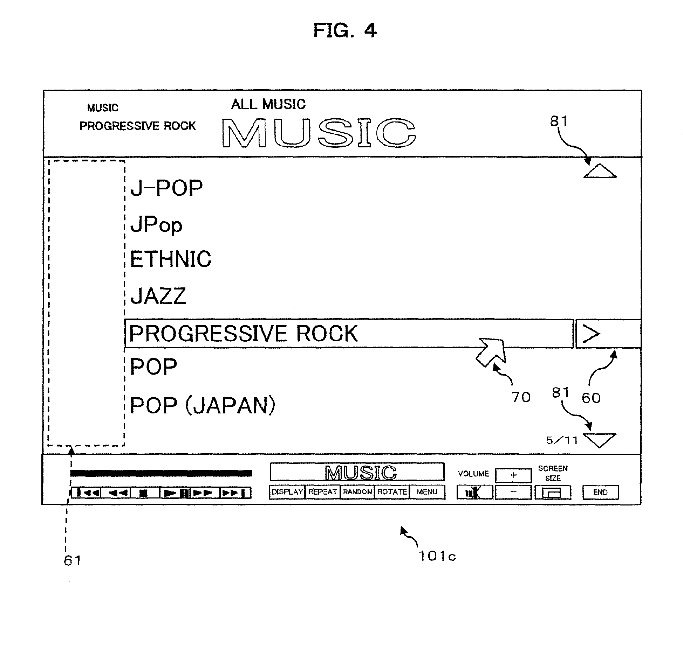

[FIG. 4] is an illustration of an example of an operation screen in a computer system according to an embodiment of the present invention.

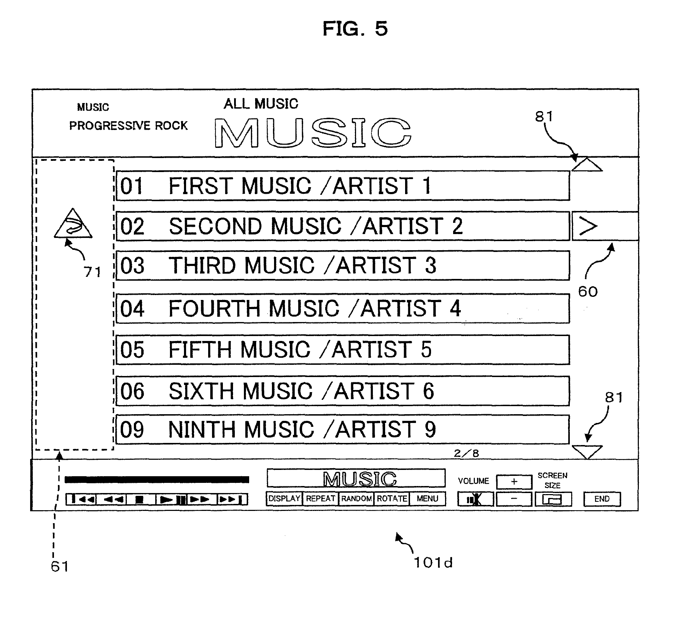

[FIG. 5] is an illustration of an example of an operation screen in a computer system according to an embodiment of the present invention.
[FIG. 6] is a flow chart for explaining an operation screen generating method in a computer system according to an embodiment of the present invention.

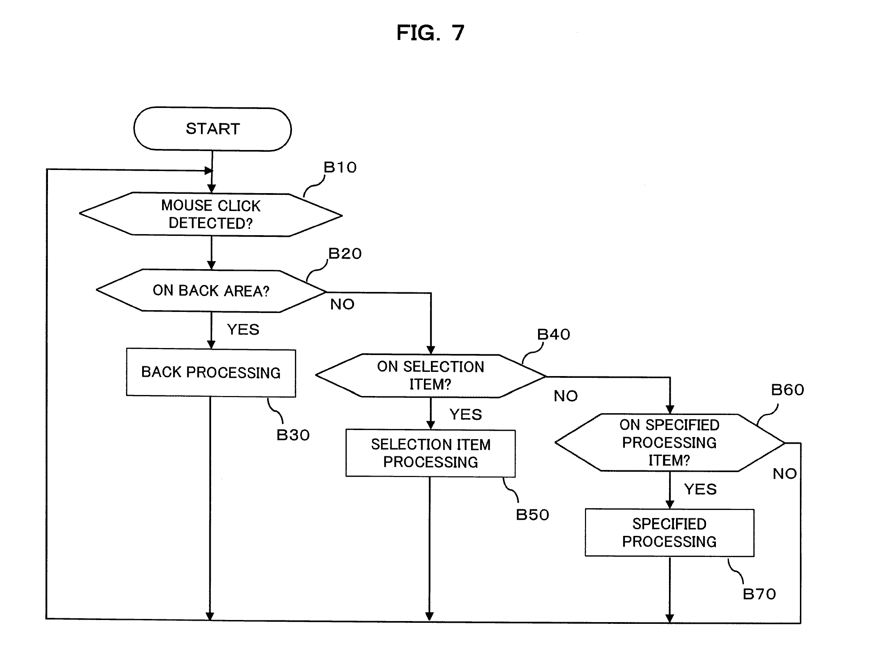

[FIG. 7] is a flow chart for explaining a processing method on an operation screen of a computer system according to an embodiment of the present invention.

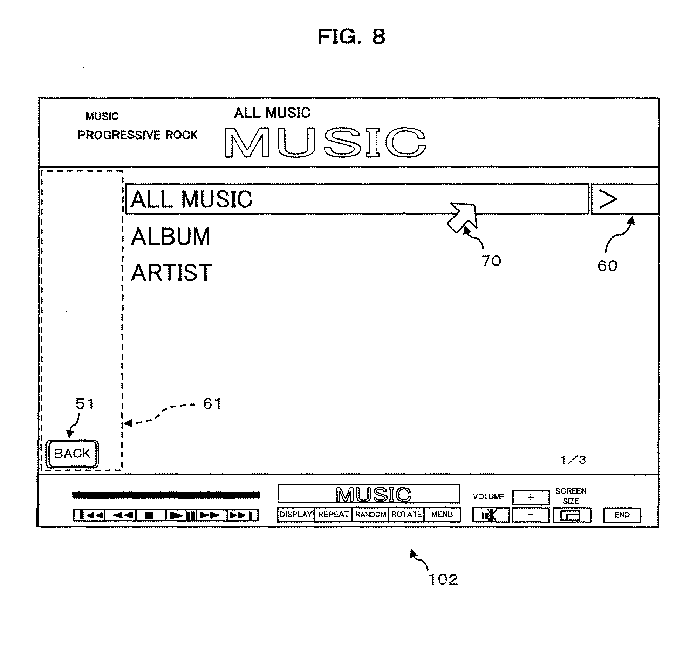

[FIG. 8] is an illustration of an example of a different operation screen in a computer system according to an embodiment of the present invention.

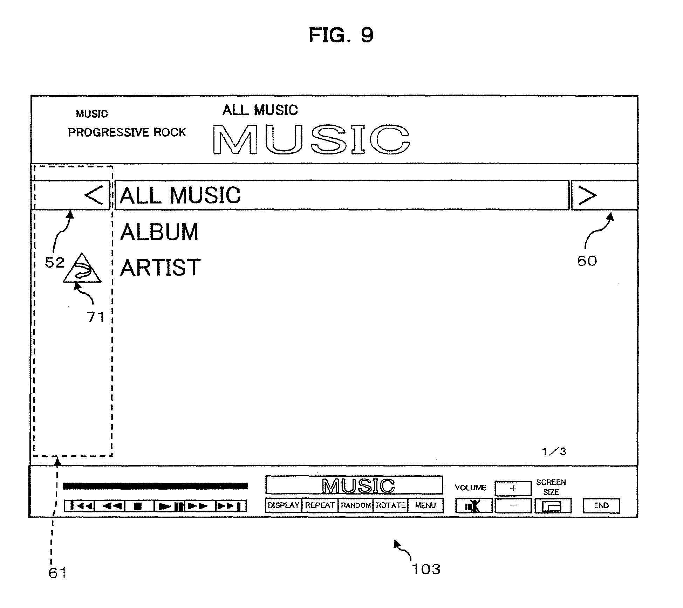

[FIG. 9] is an illustration of an example of a different operation screen in a computer system according to an embodiment of the present invention.
[FIG. 10] is an illustration of an example of an operation screen generated by a conventional operation screen generating method.
[FIG. 11] is an illustration of an example of an operation screen generated by a conventional operation screen generating method.
[FIG. 12] is an illustration of an example of an operation screen generated by a conventional operation screen generating method.
[FIG. 13] is an illustration of an example of a different operation screen generated by a conventional operation screen generating method.
[FIG. 14] is an illustration of an example of a different operation screen generated by a conventional operation screen generating method.

### BEST MODE FOR CARRYING OUT THE INVENTION

An embodiment of the present invention will be described hereinbelow with reference the drawings.

FIG. 1 is an illustrative view showing a configuration of a computer system (information processing apparatus, display control apparatus) according to an embodiment of the present invention. This computer system 1 is made up of a computer main unit 2, a display (display device) 3, a keyboard 4 and a mouse (pointing device) 5 and is designed to carry out various types of applications.

In addition, for carrying out the applications, this computer system 1 generates an operation screen (mentioned in detail later) having a plurality of selection items, an operator can select, and puts the generated operation screen on the display 3.

The display (display device) 3 is for making various types of display including operation screens which are under control of a display control unit 15, mentioned later. The keyboard 4 conducts various types of input operations in a manner such that an operator performs input through the use of keys, and the mouse (pointing device) 5 is for moving pointers 70 and 71 (see FIGs. 2, 5 and others) displayed on the display 3 and further for carrying out the selection processing on the selection items and others, and it is manipulated by the operator and the pointer displayed on the display 3 moves while working with the manipulation.

The computer main unit 2 is made up of a CPU (Central Processing Unit) 10, the display control unit 15, an input control unit 16 and a dataholdingunit 14. The display control unit 15 is for carrying out the display control on the display 3 and, for example, it is designed to execute control for putting, on the display 3, an operation screen (see FIGs. 2 to 5 and others, mentioned in detail later) generated by the CPU 10 (display device information acquisition unit 17, selection item arrangement unit 11, back area setting unit 12, pointer shape changing unit 13).

The input control unit 16 is for executing the control on the input to be made through the keyboard 4 and the mouse 5, and it is made to deliver, to the CPU 10, the information related to various types of instructions/selections inputted through these keyboard 4 and mouse 5.

The CPU 10 is for executing various types of programs through the use of a memory (not shown) and hard disk (not shown) provided in the computer main unit 2 and, in this embodiment, this CPU carries out a display control program stored in, for example, an internal storage unit (in this embodiment, a RAM or ROM (both not shown) provided in the computer system 1) so as to function as the display device information acquisition unit 17, the selection item arrangement unit 11, the back area setting unit 12, and the pointer shape changing unit 13.

The display device information acquisition unit 17 is for examining/acquiring a resolution of the display 3 as display device information related to a display size of the display 3. The selection item arrangement unit 11 is for disposing, in an operation screen, selection items (mentioned in detail later) which can be selected by the pointer 70 to be operated when the operator manipulates the mouse 5, and it is made to determine the size and arrangement position of each of a plurality of selection items on the basis of the resolution of the display 3 acquired by the display device information acquisition unit 17. It is also acceptable that these size and arrangement position are determined on the basis of a size of a window to be displayed in the operation screen, instead of the resolution of the display 3.

The data holding unit 14 is for holding definition data and image data on selection items in a state previously associated with the display device information. Concretely, it is made to previously register a coordinate value (definition data) of each point of four corners of a selection item on the display 3 (operation screen) and an image (button image) to be displayed as a selection item on the display 3 so as to agree with the resolution of the display 3. This data holding unit 14 is realizable by, for example, a storage unit such as a memory or hard disk.

On the basis of the resolution of the display 3, the selection item arrangement unit 11 is for acquiring the definition data and image data on selection items agreeing with the resolution thereof and for arranging the selection items in an operation screen. This selection item arrangement unit 11 is made to determine a size and/or arrangement position of each of a plurality of selection items on the basis of the resolution (display device information) of the display 3 acquired by the display device information acquisition unit 17, and it is made to acquire the definition data and image data agreeing with the display 3 from the definition data and image data held in the data holding unit 14 and generate selection items in an operation screen on the basis of these definition data and image data.

Moreover, in a case in which there are a large number of selection items so that difficulty is encountered in once displaying them in an operation screen, the selection item arrangement unit 11 puts a scroll button 81 (see FIG. 2 and others) in the operation screen and displays a non-displayed selection item(s) through a scroll operation in this operation screen.

The back area setting unit 12 is made to set an area, which is a margin area other than the selection items in an operation screen and which directly or indirectly adjoins all the plurality of selection items, as a back area for making the display of an operation screen in a higher hierarchy relative to that operation screen or the last operation screen which has been displayed on the display 3 immediately before that operation screen when the selection thereof is made by the pointer 70.

This back area setting unit 12 is made to set, as a back area 61, an area having a position and size corresponding to the area of all the selection items which can be arranged as selection items in the operation screen and, with respect to the back area 61 in a direction of the alignment of all the selection items, it is made to set a position and size covering the area of all the selection items in the alignment direction thereof.

When the pointer 70 exists at the back area 61 (mentioned later) in the operation screen, the pointer shape changing unit 13 puts the pointer 70 on the display 3 in a state where the pointer 70 has a shape different from that of the pointer 70 in the areas other than the back area 61, which will be mentioned in detail later.

Meanwhile, in this computer system 1, the CPU 10 is designed to generate an operation screen to be displayed on the display 3. FIGs. 2 to 5 are illustrations of examples of operation screens in the computer system 1 according to an embodiment of the present invention.

Operation screens 101a to 101d shown in FIGs. 2 to 5 are examples of operation screens based on applications utilizing the present invention and are to be put on the display 3. In these operation screens 101a to 101d, various types of processing (for example, music reproduction) are conducted in a manner such that an operator conducts selection/input operations through the use of the mouse 5 and the keyboard 4.

In the operation screen 101a shown in FIG. 2, selection items (choices) which can be selected by an operator are displayed as a list at an approximately central position thereof in its right and left directions and, in the example shown in FIG. 2, "Music", "Photo" "Video", "DVD" and "Media" are displayed as the selection items. In the following description, a plurality of selection items displayed as a list in a selection screen will sometimes be referred to as a selection item group.

In addition, in the operation screen 101a, of these plurality of selection items, an item selected when a click is made once by, for example, the mouse 5 is displayed in a state surrounded by a rectangular frame so as to make clear a selected state (which will sometimes be referred to as an active state). The example shown in FIG. 2 shows that the selection item "Music" is in the active state. The following description will be given in the case of a mouse is used as a pointing device which moves the pointer 70.

Still additionally, in the operation screen 101a, a decision key 60 for the decision of the selection processing is displayed at a position on the right side of the selection item which is in the active state. This decision key 60 is formed at a height approximately equal to that of the selection item and, when the mouse is clicked (selected/decided) in a state where the pointer 70 is moved to overlap with this decision key 60, that selection item is decided, thus carrying out the processing set in advance with respect to that selection item. In the operation screen 101a shown in FIG. 2, for example, when the "music" is selected/decided, the music reproduction function of this application is executed so as to display the operation screen 101b, shown in FIG. 3, on the display 3.

Although, in addition to the music reproduction function, this application has various types of functions including the reproduction (display) of a picture (photo) image, video, DVD and other data reproduction/execution, and others, in this embodiment, a description will be given hereinbelow of the reproduction of a music file.

The operation screen 101b shown in FIG. 3 is a screen for narrowing down the music data the operator desires the reproduction, and as selection items (choices) which can be selected by the operator, "all music", "album" and "artist" are displayed as a list in a row in a perpendicular (vertical) direction of the screen at an approximately central position of the screen in its right and left directions.

In addition with respect to any one of these "all music", "album" and "artist" , the operator can select a music data narrow-down method.

Still additionally, in the operation screen 101b, a back area 61 for displaying a higher hierarchy relative to the operation screen 101b or the last operation screen which has been displayed on the display 3 immediately before this operation screen 101b is formed in a left-side area (area surrounded by a dotted line in FIG. 3) relative to all the three selection items ("all music", "album" and "artist").

With respect to this back area 61, the return to the operation screen 101a which is an operation screen in a higher hierarchy relative to the operation screen 101b takes place in a manner such that the operator moves the pointer 70 onto the back area 61 by use of the mouse 5 and clicks (selects, designates) it. That is, the back area 61 is an area for displaying the operation screen 101a on the display 3 and an area having a position and size corresponding to the area of all the selection items which can be arranged as selection items. Moreover, the position and size of the back area 61 in a direction of the alignment of all the selection items are set so that the back area 61 covers the area of all the selection items in an alignment direction thereof.

In the following description, in this embodiment, as an example, let it be assumed that a plurality of operation screens are hierarchically associated with each other and, when a click of the pointer 70 is made on the back area 62 formed in each of the operation screens, an operation screen in a higher hierarchy relative to that operation screen appears.

Moreover, in the example shown in FIG. 3, although the back area 61 is surrounded by a dotted line for convenience only, in the operation screen to be actually put on the display 3, the back area 61 is set to have an attribute of an invisible state and the dotted line indicating the back area 61 does not appear. When the back area 61 is displayed like the back key 51 in the background art, the back area 61 larger than the back key 51 tends to ruin the fine view.

The vertical length of the back area 61 corresponds to the arrangeable length in a direction of alignment of the selection items, i.e., in this embodiment, in a vertical direction of the selection item group. In the case of the operation screen 101b, since seven selection items can be arranged in the vertical direction, the vertical length of the back area 61 is set at a length corresponding to the sum of lengths of seven selection items in the vertical direction. It is also acceptable that the corresponding length of the back area 61 is equal to that length of the selection item group, or it is also considered that the corresponding length of the back area 61 is set to be somewhat larger with respect to the length of the selection item arrangeable area in the alignment direction. Moreover, the position of the back area 61 is determined so that the vertical area of the back area 61 includes or covers the vertical area of the selection item group.

In the operation screen 101b, the back area 61 is formed, in a margin area other than the selection items, at an area adjacent directly or indirectly to all the plurality of selection items and at a left side position in a horizontal direction.

In addition, at a lower side of the operation screen 101b, there are formed various items (which will sometimes be referred to as specified processing items) for selecting/conducting the setting related to the music reproduction such as repeat and random and various types of processing (which will sometimes be referred to as specified processing) such as volume control and change of screen size. These specified processing are conducted in a manner such that the operator moves the pointer 70 to these specified processing items through the use of the mouse 5 and clicks (selects/designates) them.

The operation screen 101c shown in FIG. 4 shows, as a list, the genre of music data managed by this application. This operation screen 101c is configured as well as the above-mentioned operation screen 101b, and the selection items which can be selected by the operator are displayed as a list at an approximately central position thereof in its right and left directions. In the example shown in FIG. 4, as the selection items, there are displayed "J-POP", "JPop", "Ethnic", "Jazz", "Progressive Rock", "Pop" and "Pop (Japan)". In this screen, although the selection items up to seven can be displayed at the same time, new selection items can be displayed in a manner such that the operator carries out the scroll operation by using the scroll button 81, thereby enabling the operator to carry out the selection operations exceeding seven kinds through this screen.

Still additionally, also in this operation screen 101c, a decision key 60 formed at a height approximately equal to that of the selection item which is in the active state is displayed at a position on the right side of the selection item and, as well as the operation screen 101c, a back area 61 for displaying an operation screen in a higher hierarchy relative to the operation screen 101c is formed in a left-side area relative to all the selection items.

The operation screen 101d shown in FIG. 5 is made to display, of all the music data managed by this application, music corresponding to the genre, selected through the operation screen 101c, as a list. This operation screen 101d is configured as well as the above-mentioned operation screen 101b and the selection items selectable by the operator are displayed as a list at an approximately central position thereof in its right and left directions. In the example shown in FIG. 5, music title and the corresponding artist names are displayed as a list.

Yet additionally, also in this operation screen 101d, a decision key 60 formed at a height approximately equal to that of the selection item is displayed at a position on the right side of the choice which is in the active state and, as well as the operation screen 101b, a back area 61 for displaying a higher hierarchy relative to the operation screen 101d or the last operation screen which has been displayed on the display 3 immediately before this operation screen 101d is formed in a left-side area relative to all the selection items.

Moreover, the operation screens 101a, 101b, 101c and 101d shown in FIGs. 2 to 5 are associated hierarchically as mentioned above and, for example, when the selection item "music" is selected/decided in the operation screen 101a, the operation screen 101b is put on the display 3 and, when the selection item "all music" is selected/decided in the operation screen 101b, the operation screen 101c is put on the display 3. In addition, when the selection item "progressive rock" is selected/decided in the operation screen 101c, the operation screen 101d is put on the display 3.

Still moreover, when the desired music for the reproduction is selected/decided from the list in this operation screen 101d, the reproduction of this music starts. That is, the operation screen 101b is in a lower hierarchy with respect to the operation screen 101a, the operation screen 101c is in a lower hierarchy relative to the operation screen 101b and the operation screen 101d is in a lower hierarchy relative to the operation screen 101c.

Furthermore, in this computer system 1, when the pointer 71 lies on the back area 61 as shown in FIG. 5, the pointer shape changing unit 13 indicates, on the display 3, the pointer 71 in a shape different from the shape of the pointer 70 in areas other than the back area 61. In this computer system 1, for example, as shown in FIGs. 2 and 3, the pointer 70 is indicated with the shape of an arrow when the pointer 70 exists on the selection item while, when a detection is made that the pointer 71 exists on the back area 61, for example, as shown in FIG. 5, the pointer shape changing unit 13 changes this pointer 70 to a shape (pointer 71) formed by disposing an arrow curved by approximately 180 degrees in a triangle and displays it therein. This enables the operator to easily know that the pointer 71 is on the back area 61, which provides a high convenience. In the following description, the pointer whose shape is changed by the pointer shape changing unit 13 is particularly designated at numeral 71.

Referring to a flow chart (steps A10 to A40) of FIG. 6, a description will be given hereinbelow of a method of generating the operation screens 101a to 101d in the computer system 1 according to an embodiment of the present invention.

First of all, the display device information acquisition unit 17 examines the resolution of the display 3 and retains the result of the examination in a memory (not shown) (step A10; display screen information acquisition step). Moreover, on the basis of the resolution acquired in the step A10, the selection item arrangement unit 11 acquires a coordinate value (definition data) for specifying the display position of the selection items and button image data, which agrees with that resolution, from the data holding unit 14 (step A20, step A30), thereby carrying out the setting/arrangement of the selection items (selection item arrangement step).

Let it be assumed that the coordinate value for specifying the display position of the selection items and the button image data are retained in advance in the data holding unit 14 (data holding step).

Following this, the back area setting unit 12 determines an area for the back area 61 (step A40; back area setting step). Concretely, for example, with respect to a plurality of selection items, the coordinates at the left and upper ends thereof and the coordinates at the left and lower ends thereof are acquired so that, on the basis of these coordinate values, the position and size corresponding to the area of all the selection items which can be arranged as selection items in the operation screen are set for the back area 61.

The operation screen generated in this way is put as, for example, one window on the display 3, and when the operator has manipulated the mouse 5 so as to change the size of this window, the operation screen is enlarged/reduced to the changed window size by the function of the OS (Operating System) of the computer system 1 and is then put on the display 3.

FIG. 7 is a flow chart (steps B10 to B70) for explaining a method for the processing on an operation screen in the computer system 1 according to an embodiment of the present invention.

The computer system 1 makes a decision as to whether or not a click of the mouse 5 is made in the operation screen (step B10) and, if no click is made therein (see NO route from step B10), repeatedly carries out the step B10 until the detection of the click of the mouse 5. On the other hand, in the case of the detection of the click of the mouse 5 (see YES route from step B10), the computer system 1 then makes a decision as to whether or not the position of the pointer 70 exists on the back area 61 (step B20). If the position of the pointer 70 is on the back area 61, the pointer shape changing unit 13 changes the shape of the pointer to a shape different from the shape of the pointer 70 in areas other than the back area 61 (pointer shape changing step).

In a case in which the position of the pointer 70 is on the back area 61 (see YES route from step B20), the repeat processing is conducted, thus returning to the step B10 after a higher hierarchy relative to that operation screen or the last operation screen which has been displayed on the display 3 immediately before that operation screen is put on the display 3 (step B30).

On the other hand, if the position of the pointer 70 does not lie on the back area 61 (see NO route from the step B20), a decision is then made as to whether or not the position of the pointer 70 is on a selection item (step B40). If the position of the pointer 70 is on the selection item (see YES route from step B40), the processing related to that selection item is conducted (step B50), and the operation returns to the step B10.

In addition, if the position of the pointer 70 is not on a selection item (see NO route from the step B40), a decision is made as to whether the position of the pointer 70 does not exist on the back area 61 but existing on a specified processing item (step B60). If it is on the specified processing item (see YES route from step B60), this specified processing is conducted (step B70) and the operation then returns to the step B10. On the other hand, if the position of the pointer 70 does not exist on the back area nor on the specified processing item (see NO route from step B60), the operation returns intact to the step B10.

As described above, with the computer system 1 according to the embodiment of the present invention, the back area 61 having a position and dimension corresponding to the area of all the selection items which can be arranged as selection items is formed in the operation screens 101b to 101d and, even in a case in which the pointer 70 is positioned on any one of the selection items, the pointer 70 is movable onto the back area 61 only in a manner such that an operator horizontally moves the pointer 70 in the left-side direction in the operation screen through the use of the mouse 5. This can achieve the minimal movement of the pointer 70 up to this back area 61, which enhances the operability.

That is, even in a case in which the pointer 70 is positioned on any selection item, the movement to an operation screen in a higher hierarchy relative to each of the operation screens 101b to 101d or to the operation screen immediately before that operation screen is achievable only in a manner such that the operator horizontally moves the pointer 70 in the left-side direction in that operation screen by using the mouse 5 and clicks (selects/designates) it.

In particular, with respect to a plurality of operation screens configured to make a deep hierarchical structure, in the case of the return to a higher operation screen from one operation screen in a deep hierarchy through a plurality of hierarchies, even when the pointer 70 is positioned on any selection item as a result of the switching between the operation screens, the return to a higher-order operation screen is achievable only by moving the pointer 70 in a horizontal direction, which provides a high convenience.

In addition, since the pointer 70 is displayed on the display 3 in a shape different from the shape (pointer 71) in areas other than the back area 61 when the pointer 70 lies on the back area 61, the operator can easily grasp that the pointer 71 is on the back area 61, which provides a high convenience.

A program (operation screen generation program) for realizing the functions as the above-mentioned display device information acquisition unit 17, selection item arrangement unit 11, back area setting unit 12 and pointer shape changing unit 13 is offered in a state recorded in a camputer-readable recording medium such as flexible disk, CD-ROM, CD-R, CD-R/W, DVD, DVD-R, DVD-R/W, magnetic disk, optical disk and magneto optical disk. Moreover, before using the program, the computer reads out the program from this recording medium and transfers and stores it into an internal storage unit or external storage unit. Still moreover, it is also appropriate that this program is first recorded in a storage unit (recording medium) such as magnetic disk, optical disk or magneto optical disk and then offered through a communication line to the computer.

In addition, in this embodiment, the computer is the concept including a hardware and an operating system and signifies the hardware which operates under control of the operating system. In a case in which the operating system is unnecessary and an application program itself operates the hardware, this hardware itself corresponds to the computer. The hardware is equipped with, at least, a microprocessor such as a CPU and a means for reading out a computer program recorded in a recording medium, and in this embodiment, the computer system 1 has a function as the computer.

Moreover, as the recording medium in this embodiment, it is possible to use various types of computer-readable mediums including the above-mentioned flexible disk, CD-ROM, CD-R, CD-R/W, DVD, DVD-R, DVD-R/W, magnetic disk, optical disk and magneto optical disk and further including an IC card, ROM cartridge, magnetic tape, punch card, internal storage unit (memory such as RAM, ROM or the like) of the computer, external storage unit and code-printed matter such as bar-code.

The present invention is not limited to the above-described embodiment, and it is intended to cover all changes of the embodiment of the invention herein which do not constitute departures from the spirit and scope of the invention.

For example, although in the above-described embodiment the return to a higher hierarchy or the last operation screen is made only when a click is made in a state where the pointer 70 is moved to the back area 61, the present invention is not limited to this, but it is also acceptable that, combined with the back area 61, a key for the return to the higher hierarchy or the last operation screen is provided in the operation screen.

FIGs. 8 and 9 are illustrations of different examples of operation screens in the computer system 1 according to an embodiment of the present invention. An operation screen 102 shown in FIG. 8 has a back key 51 at a left lower position thereof in addition to the operation screen 101b shown in FIG. 3. An operation screen 103 shown in FIG. 9 has a back key 52 formed on the left side of the active selection item and at a height approximately equal to that of the selection item.

The formation of these back keys 51 and 52 allows even an operator who does not become skillful in the operation of the application to easily carry out the back operation to the higher hierarchy or the last operation screen.

Moreover, although in the above-described embodiment a plurality of selection items are arranged in parallel along a vertical direction in a screen and the back area 61 is formed at a left-side position in a horizontal direction with respect to all the plurality of selection items in a state directly adjacent thereto, the present invention is not limited to this, but it is also appropriate that the plurality of selection items are arranged in parallel in a horizontal direction in the screen, or that a back area is formed at a right-side position in a horizontal direction with respect to all the plurality of selection items or an upper side or lower side position in a vertical direction with respect to all the plurality of selection items.

In general, in the languages such as Japanese and English, characters are written so as to flow from the left side toward the right slide and from the upper side toward the lower side and, hence, it is preferable that the back area 61 is disposed on the left side or upper side with respect to the selection items from the viewpoint of human engineering and by reason that the operation can be conducted intuitively and for other reasons.

Still moreover, although in the above description of the embodiment a plurality of operation screens are associated in a hierarchical manner, these plurality of operation screens are not always required to be in hierarchical relation, but the present invention is also applicable to a case in which, with respect to a plurality of operation screens merely having the before-and-after relation in a sequence of display, these plurality of operation screens are successively displayed retroactively. That is, it is also acceptable that the operation screens (display screens) displayed on the display 3 are first stored in a storage area such as a buffer in the order of display and the operation screens stored in the storage area are then put successively and retroactively on the display 3 whenever a mouse click is made on the back area 61 in each operation screen.

Yet moreover, although in the above-described embodiment the pointer 71 is displayed on the display 3 in a shape different from the shape of the pointer 70 in areas other than the back area 61 when the pointer 71 lies on the back area 61 as shown in FIG. 5 or 9, the shape of this pointer 71 is not limited to the above-mentioned shape, but it is also acceptable that, for example, a different shape is used or a message indicative of the fact that the pointer 70 is positioned at the back area 61 is displayed in the vicinity of the pointer 70 or other places. That is, it is possible to cover all changes which do not constitute departures from the spirit and scope of the invention.

In addition, in this embodiment, the change of the shape of the pointer 70 includes a change of color of the pointer 70, for example, it includes a change of color in a state where the shape of the pointer 70 left intact.

Still additionally, the selection processing on the selection items and others in each of the above-mentioned operation screens does not depend upon only the manipulation of the pointer 70 by the mouse 5, but it is also acceptable that the selection processing thereon is conducted through the key input by the keyboard 4.

The disclosure of each of the embodiments of the present invention enables aperson skilled in the art to carry out/manufacture the present invention.

### INDUSTRIAL APPLICABILITY

For example, with respect to a plurality of operation screens having the before-and-after relation in sequence of display on a display, the present invention is also applicable to a case in which these plurality of operation screens are successively displayed retroactively.

## Claims

1. An operation screen generating method, which generates an operation screen having a plurality of selection items formed hierarchically and selectable byapointer (70) operated byapointing device (5), **characterized by** comprising:
a selection item arrangement step of arranging the selection items on said operation screen; and
a back area setting step of setting an area having a position and size corresponding to an area of all the selection items, arrangeable as selection items, as a back area for making a return to a higher hierarchy relative to the current hierarchy when a selection is made by said pointer (70).

2. The operation screen generating method according to claim 1, **characterized in that**, in said back area setting step, the position and size of said back area are set so that an area of said back area along a direction of alignment of all the selection items covers an area of all the selection items in the alignment direction.

3. The operation screen generating method according to claim 1, **characterized in that**, in said selection item arrangement step, a non-displayed selection item is displayed by a scroll operation.

4. The operation screen generating method according to any one of claims 1 to 3, **characterized by** further comprising a display device information acquisition step of acquiring display device information on a display size on a display device (3) so that, in said selection item arrangement step, a size and/or arrangement position of each of the plurality of selection items are determined on the basis of the display device information acquired in said display device information acquisition step.

5. The operation screen generating method according to claim 4, **characterized by** further comprising a data holding step of holding definition data and image data on the selection item in a state previously associated with the display device information so that, in said selection item arrangement step, the definition data and image data agreeing with said display device (3) are acquired from the definition data and image data held in said data holding step on the basis of the display device information acquired in said display device information acquisition step and the selection item on said operation screen is generated on the basis of the acquired definition data and image data.

6. The operation screen generating method according to any one of claims 1 to 5, **characterized by** further comprising a pointer shape changing step of, when said pointer (71) exists on said back area, displaying said pointer (71) having a shape different from a shape of the pointer (70) in an area other than said back area.

7. The operation screen generating method according to any one of claims 1 to 6, **characterized in that** said back area is set in an invisible state.

8. A display control apparatus, which generates an operation screen having a plurality of selection items formed hierarchically and selectable by a pointer (70) operated by a pointing device (5), comprising:
a selection item arrangement unit (11) for arranging the selection items in said operation screen; and
a back area setting unit (12) for setting an area having a position and size corresponding to an area of all the selection items, arrangeable as selection items, as a back area for making a return to a higher hierarchy relative to the current hierarchy when a selection is made by said pointer (70).

9. The display control apparatus according to claim 8, **characterized in that** said back area setting unit (12) sets the position and size of said back area so that an area of said back area along a direction of alignment of all the selection items covers an area of all the selection items in the alignment direction.

10. The display control apparatus according to claim 8, **characterized in that** said selection item arrangement unit (11) displays a non-displayed selection item by a scroll operation.

11. The display control apparatus according to any one of claims 8 to 10, **characterized by** further comprising a display device information acquisition unit (17) for acquiring display device information on a display size on a display device (3) so that said selection item arrangement unit (11) determines a size and/or arrangement position of each of the plurality of selection items on the basis of the display device information acquired by said display device information acquisition unit (17).

12. The display control apparatus according to claim 11, **characterized by** further comprising a data holding unit (14) for holding definition data and image data on the selection items in a state previously associated with the display device information so that said selection item arrangement unit (11) acquires the definition data and image data agreeing with said display device (3) from the definition data and image data held in said data holding unit (14) on the basis of the display device information acquired by said display device information acquisition unit (17) and the selection item on said operation screen is generated on the basis of the acquired definition data and image data.

13. The display control apparatus according to any one of claims 8 to 12, **characterized by** further comprising a pointer shape changing unit for, when said pointer (71) exists on said back area, displaying said pointer (71) having a shape different from a shape of said pointer (70) in an area other than said back area.

14. The display control apparatus according to any one of claims 8 to 13, **characterized in that** said back area is set in an invisible state.

15. An operation screen generating program making a computer, which generates an operation screen having a plurality of selection items formed hierarchically and selectable by a pointer (70) operated by a pointing device (5), carry out:
a selection item arrangement step of arranging the selection items on said operation screen; and
a back area setting step of setting an area having a position and size corresponding to an area of all the selection items, arrangeable as selection items, as a back area for making a return to a higher hierarchy relative to the current hierarchy when a selection is made by said pointer (70).

16. The operation screen generating program according to claim 15, **characterized by**, in said back area setting step, making said computer set the position and size of said back area so that an area of said back area along a direction of alignment of all the selection items covers an area of all the selection items in the alignment direction.

17. The operation screen generating program according to claim 15, **characterized by**, in said selection item arrangement step, making said computer display a non-displayed selection item by a scroll operation.

18. A computer-readable recording medium recording a program for making a computer, which generates an operation screen having a plurality of selection items formed hierarchically and selectable by a pointer (70) operated by a pointing device (5), carry out:
a selection item arrangement step of arranging the selection items on said operation screen; and
a back area setting step of setting an area having a position and size corresponding to an area of all the selection items, arrangeable as selection items, as a back area for making a return to a higher hierarchy relative to the current hierarchy when a selection is made by said pointer (70).

19. The computer-readable recording medium recording the operation screen generating program according to claim 18, **characterized by**, in said back area setting step, making said computer set the position and size of said back area so that an area of said back area along a direction of alignment of all the selection items covers an area of all the selection items in the alignment direction.

20. The computer-readable recording medium recording the operation screen generating program according to claim 18, **characterized by**, in said selection item arrangement step, making said computer display a non-displayed selection item by a scroll operation.
